# FASCICULE DE BREVET EUROPEEN

(11) **EP 1 961 923 B1**
(45) Date de publication et mention de la délivrance du brevet: **11.04.2012**
(21) Numéro de dépôt: 08101816.0
(22) Date de dépôt: 21.02.2008
(51) Int. Cl.: F01D 21/04

(54) **Procédé de fabrication d'un carter de turbine à gaz en matériau composite et carter ainsi obtenu.**
Verfahren zur Herstellung eines Gasturbinengehäuses aus Verbundstoff und so erzeugtes Gehäuse
Method of producing a gas turbine casing from a composite material and casing thus obtained.

(30) Priorité: 23.02.2007 FR 0753449
(43) Date de publication de la demande: 27.08.2008
(73) Titulaire: SNECMA, 75015 Paris (FR)
(72) Inventeur: Coupe, Dominique, 33185 Le Haillan (FR); Dambrine, Bruno, 77820, Le Chatelet en Brie (FR); Marlin, François, 77760 Villiers sous Grez (FR); Molinari, Olivier, 77210 Avon (FR); Phelippeau, Antoine, 92330 Sceaux (FR); Verseux, Philippe, 75013 Paris (FR)
(74) Mandataire: Joly, Jean-Jacques

(56) Documents cités:
- EP-A- 1 526 285
- EP-A- 1 674 244
- EP-A- 1 674 671
- US-A1- 2006 093 847

## Description

### Arrière-plan de l'invention

L'invention concerne les carters de turbine à gaz, et plus particulièrement les carters de rétention pour soufflante de turbine à gaz pour moteurs aéronautiques.

Dans un moteur aéronautique à turbine à gaz, le carter de soufflante remplit plusieurs fonctions. Il définit la veine d'entrée d'air dans le moteur, supporte un matériau abradable en regard des sommets d'aubes de la soufflante, supporte une structure éventuelle d'absorption d'ondes sonores pour le traitement acoustique en entrée du moteur et incorpore ou supporte un bouclier de rétention. Le bouclier de rétention constitue un piège à débris retenant les débris, tels que des objets ingérés ou des fragments d'aubes endommagées, projetés par centrifugation, afin d'éviter qu'ils traversent le carter et atteignent d'autres parties de l'aéronef.

De façon courante, un carter de rétention de soufflante est formé par une paroi métallique relativement mince définissant la veine d'entrée et supportant le matériau abradable et le traitement acoustique éventuel, et par une structure de bouclier fixée sur cette paroi du côté extérieur, au niveau de la soufflante. Une telle structure de bouclier peut être formée par des couches de texture fibreuse. On pourra se référer par exemple aux documents US 4 699 567, US 4 902 201 et US 5 437 538.

Il a été proposé dans le document EP 1674 244 de réaliser un carter de rétention de soufflante d'épaisseur constante en matériau composite de type fibres/résine par réalisation d'une préforme fibreuse, imprégnation par une résine et moulage pour obtenir directement une forme voulue. La préforme est réalisée par une forme de tressage triaxial.

Le document US 2006/0093847 concerne aussi la réalisation d'un carter de rétention de soufflante mais en formant des surépaisseurs au moyen de couches d'âme en nids d'abeilles métalliques intercalées entre des couches de matériau composite fibres/résine et assemblées à celles-ci par exemple par collage.

Le document EP 674 671 propose aussi de réaliser un carter de rétention de soufflante en un matériau composite d'épaisseur variable, l'épaisseur étant plus importante au niveau de la soufflante. Des couches fibreuses d'âme sont superposées formées de tresses alignées circonférentiellement. D'autres couches fibreuses sont ajoutées formées de fibres tressées enroulées en spirale. Les couches fibreuses sont liées par une résine thermodurcissable. En cas d'impact, l'énergie cinétique est dissipée par délaminage, c'est-à-dire décohésion entre les couches fibreuses, fissuration de la résine et rupture de fibres au stade ultime.

On connaît par ailleurs des documents US 2005/084 377 et US 2006/257 260 un procédé permettant de réaliser une préforme fibreuse pour une aube de soufflante en matériau composite, la préforme fibreuse étant obtenue par tissage tridimensionnel directement et en une seule pièce en faisant varier épaisseur, largeur et armure pendant le tissage.

### Objet et résumé de l'invention

L'invention a pour but de proposer un procédé de fabrication d'un carter de turbine à gaz en matériau composite d'épaisseur variable ayant des propriétés améliorées tant du point de vue structural que du point de vue tenue à l'impact.

Ce but est atteint grâce à un procédé comprenant la formation d'un renfort fibreux par des couches superposées d'une texture fibreuse et la densification du renfort fibreux par une matrice,
procédé dans lequel la texture fibreuse est réalisée par tissage tridimensionnel avec épaisseur évolutive et est enroulée en plusieurs couches superposées sur un mandrin de profil correspondant à celui du carter à fabriquer, afin d'obtenir une préforme fibreuse d'épaisseur variable de forme correspondant à celle du carter à fabriquer.

L'enroulement sur un mandrin d'une texture tissée d'épaisseur évolutive permet de disposer directement d'une préforme tubulaire ayant le profil désiré avec épaisseur variable.

L'enroulement d'une texture tissée permet en outre de disposer de fils enroulés en direction circonférentielle contribuant aux propriétés structurales désirées du carter sans qu'il soit nécessaire, comme cela semble être le cas dans le document EP 1 674 671 précité, d'insérer des fils longitudinaux dans des tresses.

De plus, dans le cas d'un carter de rétention de soufflante, il a été observé que la dissipation de l'énergie à l'impact se produit essentiellement par microfissuration de la matrice et non par délaminage, donc sans variation substantielle de la forme du carter.

Avantageusement, la texture fibreuse est tissée avec appel en chaîne sur un tambour ayant un profil déterminé en fonction du profil du carter à fabriquer. Un appel différentiel des fils de chaîne est ainsi réalisé en fonction de leurs trajets circonférentiels différents lors de l'enroulement pour former la préforme.

Une préforme en une seule pièce peut être obtenue par enroulement de tissu tridimensionnel d'épaisseur évolutive, y compris lorsque la préforme présente localement de fortes variations d'épaisseur. Ainsi, dans le cas où le carter à fabriquer comprend au moins une bride, la préforme peut avantageusement être réalisée en une seule pièce avec une partie de préforme correspondant à la bride du carter. Une partie de préforme de bride peut ainsi être intégrée directement dans la préforme de carter, avec des fils enroulés en direction circonférentielle dans la préforme de bride contribuant à conférer des propriétés de tenue mécanique souhaitées pour la bride du carter.

Avantageusement encore, la texture fibreuse est tissée avec une épaisseur progressivement croissante à partir de ses extrémités longitudinales dans des zones adjacentes à ses extrémités longitudinales.

La texture fibreuse peut être formée par tissage tridimensionnel avec armure interlock.

L'invention vise aussi un carter de rétention de soufflante de turbine à gaz ayant une épaisseur variable et étant en un matériau composite avec un renfort fibreux densifié par une matrice, dans lequel le renfort fibreux est constitué par une texture d'épaisseur évolutive formée par tissage tridimensionnel et enroulée en couches superposées.

L'invention vise encore un moteur aéronautique à turbine à gaz ayant un tel carter de rétention de soufflante.

### Brève description des dessins

L'invention sera mieux comprise à la lecture de la description faite ci-après, à titre indicatif mais non limitatif, en référence aux dessins annexés, sur lesquels :
- la figure 1 est une vue très schématique d'une turbine à gaz de moteur aéronautique ;
- la figure 2 est une demi-vue en coupe axiale montrant un profil de carter de rétention pour soufflante de turbine à gaz telle que celle de la figure 1 ;
- la figure 3 est une demi-vue en coupe axiale montrant un tambour d'appel pour le tissage tridimensionnel d'une texture fibreuse destinée à la formation d'une préforme fibreuse de carter tel que celui de la figure 2 ;
- les figures 4 et 5 illustrent schématiquement des armures de tissage tridimensionnel de type interlock ;
- la figure 6 est une vue en coupe d'une couche de la texture fibreuse obtenue par tissage avec appel par le tambour de la figure 3 ;
- la figure 7 est une demi-vue en coupe axiale à échelle agrandie montrant un mandrin d'enroulement de la texture fibreuse de la figure 3 pour former la préforme de carter ; et
- la figure 8 est une demi-vue en coupe axiale à échelle agrandie d'une préforme de carter obtenue par enroulement de texture fibreuse sur le mandrin de la figure 7.

### Description détaillée de modes de réalisation de l'invention

L'invention sera décrite ci-après dans le cadre de son application à la fabrication d'un carter de soufflante de moteur aéronautique à turbine à gaz.

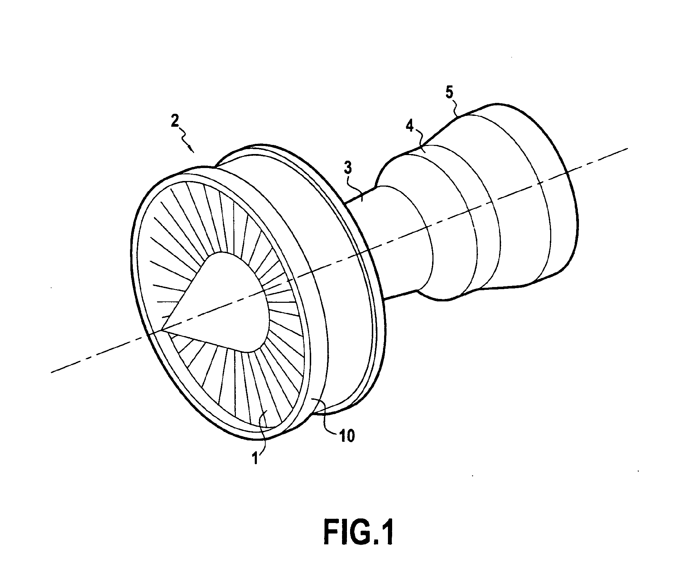

Un tel moteur, comme montré très schématiquement par la figure 1 comprend, de l'amont vers l'aval dans le sens de l'écoulement de flux gazeux, une soufflante 1 disposée en entrée du moteur, un compresseur 2, une chambre de combustion 3, une turbine haute-pression 4 et une turbine basse pression 5. Les turbines HP et BP sont couplées respectivement au compresseur et à la soufflante par des arbres coaxiaux respectifs.

Le moteur est logé à l'intérieur d'un carter comprenant plusieurs parties correspondant à différents éléments du moteur. Ainsi, la soufflante 1 est entourée par un carter de soufflante 10.

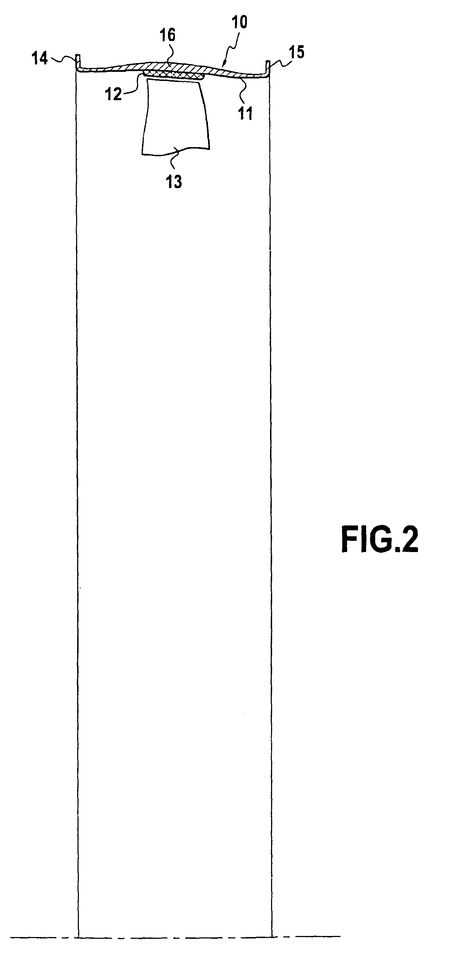

La figure 2 montre un profil de carter de soufflante 10 en matériau composite tel qu'il peut être obtenu par un procédé selon l'invention. La surface interne 11 du carter définit la veine d'entrée d'air. Elle peut être munie d'une couche de revêtement abradable 12 au droit de la trajectoire des sommets d'aubes de la soufflante, une aube 13 étant partiellement montrée de façon très schématique. Le revêtement abradable est donc disposé sur une partie seulement de la longueur (en direction axiale) du carter. Un revêtement de traitement acoustique (non représenté) peut en outre être disposé sur la surface interne 11 notamment en amont du revêtement abradable 12.

Le carter 10 peut être muni de brides externes 14, 15 à ses extrémités amont et aval afin de permettre son montage et sa liaison avec d'autres éléments. Entre ses extrémités amont et aval, le carter 10 présente une épaisseur variable, une partie sensiblement centrale 16 du carter ayant une plus forte épaisseur que les parties d'extrémité en se raccordant progressivement à celle-ci.

La partie 16 s'étend de part et d'autre de l'emplacement de la soufflante, vers l'amont et l'aval, afin de former un carter de rétention capable de retenir des débris, particules ou objets ingérés en entrée du moteur, ou provenant de l'endommagement d'aubes de la soufflante, et projetés radialement par rotation de la soufflante, pour éviter qu'ils traversent le carter et endommagent d'autres parties de l'aéronef.

Le carter 10 est réalisé en matériau composite à renfort fibreux densifié par une matrice. Le renfort est en fibres par exemple de carbone, verre, aramide ou céramique et la matrice est en polymère, par exemple époxide, bismaléimide ou polyimide.

Selon une particularité de l'invention, le renfort fibreux est formé par enroulement sur un mandrin d'une texture fibreuse réalisée par tissage tridimensionnel avec épaisseur évolutive, le mandrin ayant un profil correspondant à celui du carter à réaliser. Avantageusement, le renfort fibreux constitue une préforme fibreuse tubulaire complète du carter 10 formant une seule pièce avec des parties de renfort correspondant aux brides 14, 15.

Le tissage tridimensionnel est réalisé avec appel des fils de chaîne sur un tambour dont le profil est choisi en fonction de celui du carter à réaliser. Il n'est pas nécessaire de choisir un tambour ayant, comme le mandrin d'enroulement, un profil reproduisant celui de la surface interne du carter à réaliser. En effet, par souci de commodité, on pourra utiliser un tambour d'appel, lors du tissage, ayant un diamètre moyen beaucoup plus petit que celui de la surface interne du carter à réaliser. Le profil du tambour d'appel est alors choisi pour que le tissu obtenu prenne aisément la forme souhaitée lors de son enroulement ultérieur sur le mandrin de mise en forme. De cette façon également, comme décrit plus loin, on peut aussi plus aisément former les parties de bord du tissu destinées à constituer les parties de préforme correspondant aux brides.

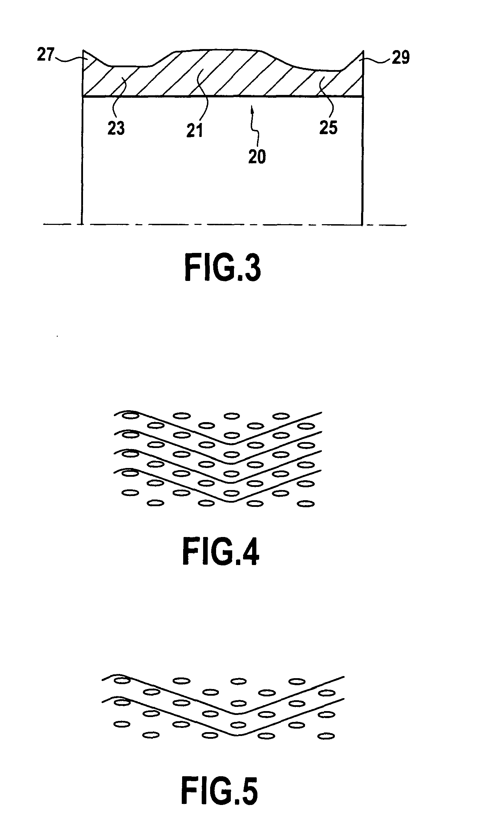

La figure 3 montre un exemple de tambour d'appel 20 utilisable pour le tissage d'une texture fibreuse permettant par enroulement sur un mandrin d'obtenir une préforme fibreuse complète pour le carter 10 de la figure 2. La partie centrale 21 du tambour 20 se raccorde progressivement à des parties latérales 23, 25 qui ont un diamètre inférieur à celui de la partie centrale 21, les parties latérales 23, 25 se raccordant à des parties d'extrémité respectives 27, 29 dont le diamètre croît de façon sensible en direction des extrémités axiales du tambour 20.

Le tissage tridimensionnel de la texture fibreuse peut être réalisé avec une armure de type interlock à plusieurs couches de fils de chaîne et de fils de trame. On confère au tissu tridimensionnel une épaisseur variable, ou évolutive permettant d'obtenir par enroulement ultérieur une préforme d'épaisseur variable correspondant à celle du carter à fabriquer. Les fils de chaîne sont appelés par le tambour 20, la texture fibreuse étant enroulée sur le tambour au fur et à mesure du tissage.

Les figures 4 et 5 montrent des exemples d'armures interlock pour deux parties d'épaisseurs différentes de la texture fibreuse, respectivement une partie centrale, plus épaisse, et des parties latérales moins épaisses. Sur les figures 4 et 5, les fils de trame sont en coupe. Un tissage tridimensionnel avec armure interlock est un tissage dans lequel chaque fil de chaîne relie entre elles plusieurs couches de fils de trame, les trajets des fils de chaîne étant identiques. Une augmentation/diminution progressive d'épaisseur est obtenue par ajout/retrait d'une ou plusieurs couches de fils de chaîne et de trame.

D'autres modes de tissage tridimensionnel sont envisageables tel que par exemple des tissages multicouches à armures multi-satin ou multi-toile. Des armures de ce type sont décrites dans le document PCT/FR/2006/050617.

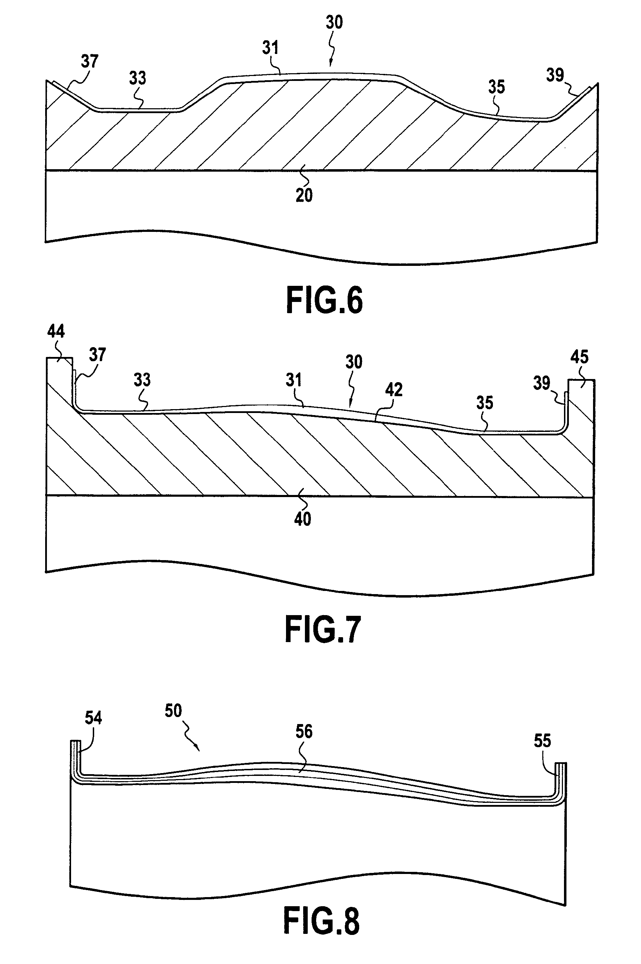

La figure 6 montre schématiquement en coupe une couche de la texture fibreuse 30 telle qu'obtenue sur le tambour 20 par tissage tridimensionnel. La texture 30 comprend une partie centrale 31 de plus forte épaisseur que les parties latérales adjacentes 33, 35, lesquelles se terminent par des parties d'extrémité 37, 39 relevées vers l'extérieur.

Pour obtenir la préforme fibreuse de carter souhaitée, la texture fibreuse 30 est enroulée en couches ou spires superposées sur un mandrin tel que le mandrin 40 de la figure 7.

Le mandrin 40 présente une surface extérieure 42 dont le profil correspond à celui de la surface interne du carter à réaliser et deux flasques latéraux 44, 45.

Par son enroulement sur le mandrin 40, la texture 30 épouse le profil de celui-ci et les parties d'extrémité 37, 39 se relèvent, en appui sur les flasques 44, 45, pour former des parties de préformes correspondant aux brides 14, 15 du carter (figure 7). On obtient ainsi des parties de préformes 37, 39 qui s'étendent radialement sans transition brusque au niveau des bords de la texture fibreuse telle que tissée, ce qui aurait posé des problèmes de réalisation lors du tissage tridimensionnel.

La figure 8 montre une vue en coupe de la préforme fibreuse 50 obtenue après enroulement de la texture fibreuse 30 en plusieurs couches sur le mandrin 40. Le nombre de couches ou spires est fonction de l'épaisseur désirée et de l'épaisseur de la texture fibreuse ; il est de préférence au moins égal à 2. Dans les parties terminales adjacentes à ses extrémités longitudinales, on peut conférer à la texture fibreuse une épaisseur progressivement croissante à partir des extrémités longitudinales et la longueur de la texture fibreuse peut alors être choisie de manière que les parties terminales se trouvent diamétralement opposées, de sorte qu'une surépaisseur notable peut être évitée au niveau des extrémités de la texture enroulée.

On obtient une préforme fibreuse 50 avec une partie centrale 56 de plus forte épaisseur, correspondant à la partie 16 du carter et des parties d'extrémité 54, 55 correspondant aux brides 14, 15.

La préforme 50 étant maintenue sur le mandrin 40, une imprégnation est réalisée par une résine. A cet effet, une enveloppe souple, ou vessie est appliquée sur la préforme. L'imprégnation peut être assistée par établissement d'une différence de pression entre le volume délimité par le mandrin et la vessie dans lequel se trouve la préforme et l'extérieur. Après imprégnation, une étape de polymérisation de la résine est réalisée.

On obtient alors directement une ébauche permettant d'obtenir le carter désiré après usinage de finition.

Les fils de chaîne de la texture fibreuse sont enroulés en direction circonférentielle et contribuent à donner la résistance mécanique souhaitée au carter, y compris au niveau des brides où des fils de chaîne sont présents.

La continuité circonférentielle de la texture fibreuse permet de conférer une bonne résistance à l'impact sans délaminage ou pratiquement sans délaminage (séparation entre couches superposées), l'endommagement à l'impact se faisant par microfissuration de la matrice. La géométrie du carter est ainsi conservée.

On a comparé la tenue à l'impact d'un matériau composite de carter de soufflante conforme à l'invention avec celle d'un alliage d'aluminium "6061" utilisé en service actuellement pour des carters de soufflante de moteurs du type "CFM56-7" de la société CFM International. Le matériau composite était constitué d'un renfort fibreux formé par couches superposées d'un tissu tridimensionnel à armure interlock en fibres de carbone et d'une matrice époxy.

A masse surfacique égale, l'énergie de perforation mesurée sur des plaques des deux matériaux a été de 3000 J pour le matériau composite, à comparer à 1500 J pour l'alliage d'aluminium.

Dans ce qui précède, on a envisagé une réalisation de la préforme du carter en une seule pièce, avec des parties de préformes correspondant aux brides éventuelles du carter. En variante, la ou chaque partie de préforme correspondant à une bride pourra être réalisée séparément par exemple par surbobinage d'une bande de texture fibreuse à une extrémité de la préforme. La bande de texture fibreuse peut être en un tissu bidimensionnel ou tridimensionnel. La liaison entre la bande de texture fibreuse bobinée peut être réalisée par couture ou par implantation d'éléments rigides par exemple en carbone.

Par ailleurs, de façon connue en soi, le carter pourra être muni de raidisseurs fixés sur la surface externe.

Le procédé décrit ci-avant convient particulièrement pour la réalisation de carters de soufflante de moteur d'avion à turbine à gaz. Il pourra toutefois être aussi utilisé pour d'autres carters ou éléments de carters de turbines à gaz, notamment de moteurs aéronautiques à turbine à gaz, tels que des carters de tuyères ou de mélangeurs.

## Revendications

1. Procédé de fabrication d'un carter (10) en matériau composite à épaisseur variable pour une turbine à gaz, comprenant la formation d'un renfort fibreux par des couches superposées d'une texture fibreuse et la densification du renfort fibreux par une matrice,
**caractérisé en ce que** la texture fibreuse (30) est réalisée par tissage tridimensionnel avec épaisseur évolutive et est enroulée en plusieurs couches superposées sur un mandrin (40) de profil correspondant à celui du carter à fabriquer, afin d'obtenir une préforme fibreuse (50) d'épaisseur variable de forme correspondant à celle du carter à fabriquer.

2. Procédé selon la revendication 1, **caractérisé en ce que** la texture fibreuse (30) est tissée avec appel en chaîne sur un tambour (20) ayant un profil déterminé en fonction du profil du carter à fabriquer.

3. Procédé selon l'une quelconque des revendications 1 et 2 pour la fabrication d'un carter (10) comprenant au moins une bride de fixation ou de liaison (14,15), **caractérisé en ce que** la préforme est réalisée en une seule pièce avec une partie de préforme (54, 55) correspondant à la bride du carter.

4. Procédé selon l'une quelconque des revendications 1 à 3, **caractérisé en ce que** la texture fibreuse (30) est tissée avec une épaisseur progressivement croissante à partir de ses extrémités longitudinales dans des zones adjacentes à ses extrémités longitudinales.

5. Procédé selon l'une quelconque des revendications 1 à 4, **caractérisé en ce que** la préforme est formée par tissage tridimensionnel avec armure interlock.

6. Carter de rétention de soufflante de turbine à gaz ayant une épaisseur variable et étant en un matériau composite avec un renfort fibreux densifié par une matrice,
**caractérisé en ce que** le renfort fibreux (50) comprend une texture d'épaisseur évolutive formée par tissage tridimensionnel et enroulée en couches superposées.

7. Carter selon la revendication 6, comprenant au moins une bride (14, 15), **caractérisé en ce que** le renfort fibreux (50) est en une seule pièce avec une partie de renfort de bride (54, 55).

8. Moteur aéronautique à turbine à gaz ayant un carter de rétention de soufflante selon l'une quelconque des revendications 6 et 7.

## Claims

1. A method of manufacturing a composite material casing (10) of varying thickness for a gas turbine, the method comprising forming fiber reinforcement as superposed layers of a fiber texture and densifying the fiber reinforcement with a matrix, and being **characterized in that** the fiber texture (30) is made by three-dimensional weaving with varying thickness, which texture is wound as a plurality of superposed layers on a mandrel (40) of profile corresponding to the profile of the casing that is to be made, so as to obtain a fiber preform (50) of varying thickness and of shape corresponding to the shape of the casing to be made.

2. A method according to claim 1, **characterized in that** the fiber texture (30) is woven with its warp being taken up on a drum (20) having a profile that is determined as a function of the profile of the casing to be made.

3. A method according to claim 1 or claim 2, for manufacturing a casing (10) having at least one fastening or connection flange (14, 15), the method being **characterized in that** the preform is made as a single part with a preform portion (54, 55) corresponding to the flange of the casing.

4. A method according to any one of claims 1 to 3, **characterized in that** the fiber texture (30) is woven with thickness that increases progressively from its longitudinal ends in zones that are adjacent to the longitudinal ends.

5. A method according to any one of claims 1 to 4, **characterized in that** the preform is formed by three-dimensional weaving with an interlock weave.

6. A fan retention casing for a gas turbine, the casing being of varying thickness and being made of a composite material with fiber reinforcement densified by a matrix, the casing being **characterized in that** the fiber reinforcement (50) comprises a texture of varying thickness formed by three-dimensional weaving and wound into superposed layers.

7. A casing according to claim 6, including at least one flange (14, 15), **characterized in that** the fiber reinforcement (50) is made as a single part including a flange-reinforcing portion (54, 55).

8. A gas turbine aeroengine including a fan retention casing according to claim 6 or claim 7.

## Patentansprüche

1. Verfahren zur Herstellung eines Gehäuses (10) aus Verbundwerkstoff mit variabler Dicke für eine Gasturbine, umfassend die Bildung einer Faserverstärkung aus übereinander angeordneten Schichten einer Faserstruktur und die Verdichtung der Faserverstärkung durch eine Matrix,
**dadurch gekennzeichnet, daß** die Faserstruktur (30) durch dreidimensionales Weben mit veränderlicher Dicke hergestellt und in mehreren übereinander angeordneten Schichten auf eine Wickelhülse (40), deren Profil demjenigen des herzustellenden Gehäuses entspricht, gewickelt wird, um einen Faservorformling (50) mit variabler Dicke zu erhalten, dessen Form derjenigen des herzustellenden Gehäuses entspricht.

2. Verfahren nach Anspruch 1, **dadurch gekennzeichnet, daß** die Faserstruktur (30) mit Zuführen der Kettfäden auf einer Trommel (20), die ein in Abhängigkeit des Profils des herzustellenden Gehäuses bestimmtes Profil hat, gewebt wird.

3. Verfahren nach einem der Ansprüche 1 und 2, für die Herstellung eines Gehäuses (10), das wenigstens einen Befestigungs- oder Verbindungsflansch (14, 15) aufweist, **dadurch gekennzeichnet, daß** der Vorformling mit einem Vorformlingteil (54, 55), das dem Flansch des Gehäuses entspricht, in einem Stück hergestellt wird.

4. Verfahren nach einem der Ansprüche 1 bis 3, **dadurch gekennzeichnet, daß** die Faserstruktur (30) mit einer Dicke, die - ausgehend von ihren Längsenden - in an ihre Längsenden angrenzenden Bereichen schrittweise zunehmend ist, gewebt wird.

5. Verfahren nach einem der Ansprüche 1 bis 4, **dadurch gekennzeichnet, daß** der Vorformling durch dreidimensionales Weben mit Interlock-Bindung gebildet ist.

6. Rückhaltegehäuse eines Gebläses einer Gasturbine, das eine variable Dicke aufweist und aus einem Verbundwerkstoff mit einer durch eine Matrix verdichteten Faserverstärkung besteht,
**dadurch gekennzeichnet, daß** die Faserverstärkung (50) eine Struktur mit veränderlicher Dicke umfaßt, die durch dreidimensionales Weben hergestellt und in übereinander angeordneten Schichten gewickelt ist.

7. Gehäuse nach Anspruch 6, das wenigstens einen Flansch (14, 15) umfaßt, **dadurch gekennzeichnet, daß** die Faserverstärkung (50) mit einem Flanschverstärkungsteil (54, 55) einstückig ausgebildet ist.

8. Gasturbinenflugtriebwerk, das ein Gebläse-Rückhaltegehäuse nach einem der Ansprüche 6 und 7 aufweist.
